# FASCICULE DE BREVET EUROPEEN

(11) **EP 3 330 059 B1**
(45) Date de publication et mention de la délivrance du brevet: **24.02.2021**
(21) Numéro de dépôt: 17199401.5
(22) Date de dépôt: 31.10.2017
(51) Int. Cl.: B29L 23/00, B29C 65/50, B29C 65/00, B65H 19/18, B29C 63/42, B65H 35/00

(54) **DISTRIBUTEUR D'ADHESIF ET DISPOSITIF DE RACCORDEMENT DE GAINES COMPORTANT UN TEL DISTRIBUTEUR**
KLEBESPENDEVORRICHTUNG UND SPLEISSVORRICHTUNG FÜR SCHLÄUCHE, DIE EINE SOLCHE SPENDEVORRICHTZUNG UMFASST
ADHESIVE DISPENSER AND DEVICE FOR CONNECTING SLEEVES COMPRISING SUCH A DISPENSER

(30) Priorité: 05.12.2016 FR 1661947
(43) Date de publication de la demande: 06.06.2018
(73) Titulaire: SLEEVER INTERNATIONAL COMPANY, F-91420 Morangis (FR)
(72) Inventeur: FRESNEL, Eric, 75014 Paris (FR)
(74) Mandataire: Decorchemont, Audrey Véronique Christèle

(56) Documents cités:
- EP-A1- 2 825 370
- US-A1- 2006 054 272

## Description

### Distributeur d'adhésif et dispositif de raccordement de gaines comportant un tel distributeur

L'invention concerne un distributeur d'adhésif.

L'invention concerne également un dispositif de raccordement de deux gaines tubulaires aplaties comportant un tel distributeur d'adhésif.

### ARRIERE-PLAN TECHNOLOGIQUE DE L'INVENTION

Dans le domaine de la pose de manchons sur des objets en défilement, comme des manchons thermorétractable, les manchons sont en général obtenus par le tronçonnage d'une gaine tubulaire qui est conditionnée dans un état aplati sous forme de bobine puis ouverte par un conformateur avant son découpage transversal.

Compte tenu des cadences des machines de pose de manchons sur des objets en défilement, se pose répétitivement le problème du changement de bobines lorsqu'une bobine est entièrement consommée.

Dans des techniques relativement anciennes, le raccordement des deux bobines se faisait manuellement.

Ceci n'est cependant guère plus envisageable avec des cadences très élevées des machines de pose de manchons sur des objets en défilement.

On a plus récemment cherché à automatiser le processus de raccordement de gaines.

Il est ainsi connu du document EP 2 825 370, un dispositif de raccordement de deux gaines tubulaires aplaties comprenant un chariot permettant la mise en vis-à-vis d'une extrémité terminale d'une ancienne gaine avec une extrémité initiale d'une nouvelle gaine. Le chariot comporte par ailleurs un distributeur d'adhésif, qui divulgue les caractéristiques du préambule de la revendication 1, permettant l'encollage des deux extrémités entre elles.

Toutefois, dans le document EP 2 825 370, le distributeur d'adhésif est d'un agencement complexe obligeant notamment le distributeur à comprendre un ventilateur pour souffler sur la bande adhésive dudit distributeur afin d'en faciliter la dépose.

### OBJET DE L'INVENTION

L'invention vise à proposer un distributeur d'adhésif qui soit de structure simplifiée. L'invention vise également un dispositif de raccordement de gaines comportant un tel distributeur.

### PRESENTATION DE L'INVENTION

En vue de la réalisation de ce but, on propose un distributeur d'adhésif comprenant :
- une plateforme,
- un dévidoir monté pivotant sur la plateforme et destiné à porter un rouleau d'adhésif,
- un organe de séparation d'adhésif du rouleau d'adhésif, l'organe de séparation étant agencé sur la plateforme.

Selon l'invention, le distributeur d'adhésif comporte au moins un rouleau d'embossage agencé sur la plateforme entre le dévidoir et l'organe de séparation de sorte à, en service, embosser un ruban d'adhésif se dévidant du rouleau d'adhésif avant qu'il n'atteigne l'organe de séparation.

De la sorte, on rigidifie le ruban d'adhésif en le déformant par l'embossage avant qu'il n'atteigne l'organe de séparation ce qui permet à l'adhésif lui-même d'être rigidifié et ainsi de pouvoir être appliqué bien plus facilement sur un support à encoller.

L'invention s'avère particulièrement avantageuse lorsqu'une grande longueur d'adhésif doit venir encoller un support.

De manière particulière, l'organe de séparation est conformé de sorte à présenter une base et une pointe s'étendant à partir de la base.

De manière particulière, ladite pointe est conformée en lame de sabre.

De manière particulière, la lame de sabre est dépourvue de dent.

De manière particulière, l'organe de séparation est conformé de sorte qu'une première face principale de l'organe de séparation en contact avec le ruban d'adhésif est plane.

De manière particulière, l'organe de séparation est conformé de sorte qu'une deuxième face principale de l'organe de séparation en contact avec la bande support présente un décrochement formant une pente plus importante en sortie de l'organe de séparation.

De manière particulière, le rouleau d'embossage est conformé pour nervurer le ruban d'adhésif.

De manière particulière, le rouleau d'embossage comporte entre un et quatre disques circonférentielles.

De manière particulière, le distributeur d'adhésif comporte un organe de coupe d'un adhésif du rouleau d'adhésif.

De manière particulière, le distributeur d'adhésif comporte une barrette aspirante pour porter un adhésif du rouleau d'adhésif.

L'invention concerne également un dispositif de raccordement de deux gaines tubulaires aplaties comprenant un tel distributeur d'adhésif pour raccorder les deux gaines ensemble.

D'autres caractéristiques et avantages de l'invention ressortiront à la lecture de la description qui suit d'un mode de réalisation particulier non limitatif de l'invention.

### DESCRIPTION DES FIGURES

L'invention sera mieux comprise à la lumière de la description qui suit en référence aux figures des dessins annexés parmi lesquelles :
la figure 1 illustre schématiquement un distributeur d'adhésif selon un premier mode de réalisation de l'invention,
   - la figure 2 est une vue élargie d'une partie du distributeur représenté à la figure 1,
   - la figure 3 est une vue schématique de dessus d'un distributeur d'adhésif selon un deuxième mode de réalisation de l'invention.

### DESCRIPTION DETAILLEE D'UN MODE DE REALISATION PARTICULIER DE L'INVENTION

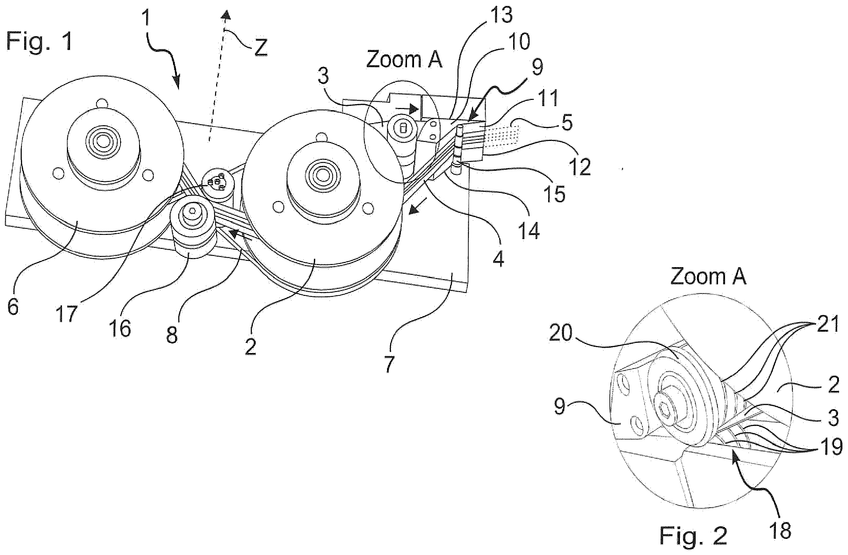

Les figures 1 et 2 illustrent un distributeur d'adhésif, généralement en 1, selon un premier mode de réalisation de l'invention.

Un tel distributeur 1 peut être utilisé dans de nombreuses applications et notamment dans le domaine des dispositifs de raccordement de gaines tubulaires aplaties, typiquement des gaines thermo-rétractables. On peut ainsi utiliser le présent distributeur dans un dispositif de raccordement de gaines tubulaires aplaties comme celui décrit dans le document EP 2 825 370.

En référence à la figure 1, le distributeur 1 comporte une plateforme 7 comprenant une partie centrale qui est ici sensiblement plane et de forme parallélépipédique. La partie centrale comporte ainsi deux faces principales.

Le distributeur 1 comporte en outre un dévidoir 2 sur lequel est monté un rouleau d'adhésif pour le dévidement du rouleau d'adhésif. Le rouleau d'adhésif comporte ici une bande support 4 sur laquelle est agencée de l'adhésif 5 destiné à venir recouvrir une surface à encoller (typiquement une des deux gaines tubulaires aplaties à raccorder ensemble), la bande support 4 et l'adhésif 5 formant ensemble un ruban d'adhésif 3.

De préférence, l'adhésif 5 est un adhésif relativement rigide. On choisit typiquement l'adhésif 5 pour que l'adhésif 5 puisse se maintenir droit une fois déroulé sur plusieurs centimètres même après décollement de la bande support 4.

Par exemple l'adhésif 5 est épais ou bien est un adhésif métallique. Par exemple l'adhésif 5 est un adhésif aluminium.

Le distributeur 1 comporte également un enrouleur 6 pour le ré-enroulement de la bande support 4.

Le dévidoir 2 et l'enrouleur 6 sont typiquement agencés sur une première face principale de la plateforme 7 de sorte à être mobiles en rotation sur la plateforme 7 selon des axes de rotation parallèles entre eux et à une première direction Z. Le distributeur 1 est ici conformé de sorte que la direction Z soit sensiblement normale à la première face principale de la plateforme 7.

Par ailleurs, le distributeur 1 est agencé de sorte que la largeur du ruban d'adhésif 3, comme celles de l'adhésif 5 et de la bande support 4, s'étende parallèlement à la première direction Z une fois le rouleau d'adhésif agencé dans le distributeur 1.

Typiquement, le distributeur 1 comporte une poulie d'entrainement 16 associée à un galet d'entraînement 17 qui coopèrent ensemble pour tracter la bande support 4 afin qu'elle se déroule du dévidoir 2 et se ré-enroule sur l'enrouleur 6.

La poulie d'entraînement 16 est à cet effet reliée à des moyens d'entraînement en rotation, faisant ou non partie du distributeur, qui comportent par exemple un moteur (les moyens d'entraînement en rotation n'étant pas ici représentés). Le moteur est typiquement asservi de sorte à provoquer la traction de la bande support 4 selon une longueur donnée, reprogrammable, afin de délivrer en conséquence une longueur particulière prédéterminée d'adhésif 5.

La poulie d'entraînement 16 est ici montée pivotante sur la plateforme 7 selon la première direction Z et agencée sur la plateforme 7 entre le dévidoir 2 et l'enrouleur 6. De même, le galet de guidage 17 est agencé sur la plateforme 7 entre le dévidoir 2 et l'enrouleur 6 et en regard de la poulie d'entraînement 16. Le galet de guidage 17 comporte par exemple une rainure sensiblement de la largeur de la bande support 4, la bande support 4 étant reçue dans ladite rainure lors de son défilement ce qui permet de bien plaquer la bande support 4 au galet de guidage 17.

De façon particulière, une courroie 8 relie le dévidoir 2 et l'enrouleur 6 pour synchroniser leurs rotations et faciliter la traction de la bande support 4.

Le distributeur 1 comporte également un organe de séparation 9 de l'adhésif 5 sur la surface à encoller qui est agencé sur la plateforme 7 en aval du dévidoir 2 (selon le sens de défilement du ruban adhésif 3 symbolisé ici par une flèche). L'organe de séparation 9 est ici conformé de sorte à présenter une base 10 et une pointe 11 s'étendant à partir de la base 10. La pointe 11 est conformée pour former une lame de sabre 12 à son extrémité libre. De préférence, la lame de sabre 12 est dépourvue de dent.

L'organe de séparation 9 est par ailleurs conformé de sorte qu'une première face principale 13 de l'organe de séparation en contact avec le ruban d'adhésif 3 est plane pour faciliter le déroulement du ruban d'adhésif 3.

L'organe de séparation 9 est en outre conformé de sorte qu'une deuxième face principale 14 de l'organe de séparation 9 en contact avec la bande support 4 (l'adhésif 5 ayant été séparé de sa bande support 4 depuis la lame de sabre 12 de l'organe de séparation 9) présente un décrochement entre le retour de la pointe 11 et la base 10, la base 10 présentant alors au niveau de la deuxième face principale 14 une pente bien plus importante que celle du retour de la pointe.

Afin de faciliter l'apposition de l'adhésif 5 sur le support à encoller, le distributeur 1 comporte ici un galet tendeur 15 agencé sur la plateforme 7 au niveau de l'organe de séparation 9 pour plaquer la bande support 4 sur l'organe de séparation 9. De préférence, le galet tendeur 15 est agencé au niveau du décrochement de la deuxième face principale 14 de l'organe de séparation 9.

Ceci permet de très bien plaquer la bande support 4 sur le retour de la pointe 11 avec un angle de défilement peu important vis-à-vis de l'adhésif 5 qui vient d'être décollé. On facilite ainsi le détachement de l'adhésif 5 de sa bande support 4.

Puis de par le décrochement, la bande support 4 est ensuite rapidement évacuée en direction de l'enrouleur 6 avec un écartement important vis-à-vis du ruban adhésif 3 qui continue d'être déroulé.

Comme plus visible à la figure 2, le distributeur 1 comporte un rouleau d'embossage 18 agencé sur la plateforme 7 entre le dévidoir 2 et l'organe de séparation 9 (dans le sens de défilement de la bande support 4). Le rouleau d'embossage 18 est ainsi agencé en sortie du dévidoir 2 soit au début du défilement du ruban d'adhésif 3 dans le distributeur 1.

Le rouleau d'embossage 18 est ici monté pivotant sur la plateforme 7 selon la première direction Z.

De préférence, le rouleau d'embossage 18 est conformé pour nervurer le ruban d'adhésif 3. A cet effet, le rouleau d'embossage 18 comporte ici trois disques 19 répartis de manière régulière sur la hauteur du rouleau d'embossage 18 (selon la première direction Z) pour former trois nervures correspondantes sur le ruban d'adhésif 3.

Ceci permet de bien rigidifier le ruban d'adhésif 3 et donc à la fois la bande support 4 et l'adhésif 5. Les nervures ainsi formées sur l'adhésif 5 permettent d'augmenter sa rigidité naturelle. On peut ainsi dérouler l'adhésif 5 sur plusieurs centimètres sans qu'il ne s'enroule sur lui-même ou ne s'affaisse une fois séparé de sa bande support 4.

Le distributeur 1 comporte un rouleau d'empreinte 20 agencé sur la plateforme 7 en regard du rouleau d'embossage 18. Le rouleau d'empreinte 20 comporte ainsi trois rainures 21 circonférentielles associées respectivement à l'un des disques 19 du rouleau d'embossage 18 pour faciliter la formation des nervures sur le ruban d'adhésif 3.

Le rouleau d'empreinte 20 est ici monté pivotant sur la plateforme 7 selon la première direction Z.

Le distributeur 1 est ainsi agencé de sorte qu'en service, le ruban adhésif 3 circule du dévidoir 2 à l'organe de séparation 9 en passant entre le rouleau d'embossage 18 et le rouleau d'empreinte 20 correspondant. Ainsi pressé entre le rouleau d'embossage 18 et le rouleau d'empreinte 20, le ruban d'adhésif 3 est nervuré avant d'atteindre l'organe de séparation 9.

Puis le ruban d'adhésif 3 vient entourer la pointe 11 dudit organe de séparation 9. La forme de la pointe 11 va provoquer le détachement de l'adhésif 5 de la bande support 4, sensiblement au niveau de la lame de sabre 12 de l'organe de séparation 9.

La bande support 4 seule continue alors de circuler le long du retour de la pointe 11, puis une fois passé le galet tendeur 15, de l'organe de séparation 9 jusqu'à l'enrouleur 6 pour s'enrouler sur l'enrouleur 6. Typiquement, la bande support 4 circule autour du dévidoir 2 avant de passer entre la poulie d'entraînement 16 et le galet d'entraînement 17 et de s'enrouler sur l'enrouleur 6.

Le distributeur 1 permet ainsi un embossage du ruban d'adhésif 3 avant qu'il n'atteigne l'organe de séparation 9. On rigidifie ainsi de manière simple et rapide le ruban d'adhésif 3.

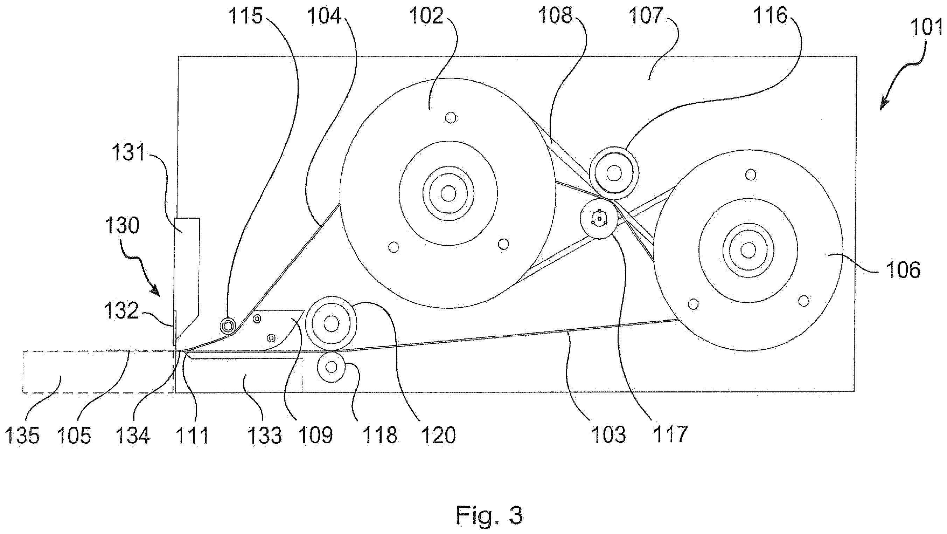

Un deuxième mode de réalisation va être à présent décrit au vu de la figure 3. Ce deuxième mode de réalisation est identique au premier mode de réalisation à la différence près que la plateforme 107 comporte également un organe de coupe, généralement désigné par 130, pour découper l'adhésif 105, une fois celui-ci séparé de la bande support 104, pour délivrer la longueur d'adhésif 105 voulue. Dans le premier mode de réalisation, cet organe de coupe était typiquement porté par une autre partie du dispositif général de raccordement.

A cet effet, l'organe de coupe 130 comporte une première platine 131 qui est agencée sur la plateforme 107 au niveau de la pointe 111 de l'organe de séparation 109. La première platine 131 est pourvue d'une lame de coupe 132 montée coulissante sur la première platine 131 entre une position de travail où la lame 132 dépasse de la première platine 131 pour découper l'adhésif 105 venant de se détacher de la bande support 104 au niveau de la pointe 111 et une position rentrée.

De préférence, l'organe de coupe 130 comporte également une deuxième platine 133 agencée en regard de la première platine 131 pour servir de contre-partie à la découpe par la lame 132 afin de faciliter la découpe de l'adhésif 105.

La première platine 131 et la deuxième platine 133 sont ici conformées de sorte à servir également de guide à l'adhésif 105 pour que l'adhésif 105 puisse être correctement évacué du distributeur d'adhésif.

Typiquement les deux platines 131 et 133 sont conformées de sorte qu'au niveau de la lame 132, l'une des platines comporte un doigt 134 venant quasiment au contact de l'autre platine.

Le dispositif de raccordement comportant ce distributeur d'adhésif, comprend typiquement une barrette aspirante 135 (représentée ici en pointillés) agencée dans le prolongement de l'organe de coupe 130 pour assurer la transmission de l'adhésif 105 jusqu'aux deux gaines tubulaires à encoller. De préférence, la barrette aspirante 135 est montée mobile relativement à l'organe de séparation 109 afin de faciliter le transfert de l'adhésif 105 vers les deux gaines à encoller.

La barrette aspirante 135 est également ici conformée de sorte à servir de contre-partie à la découpe par la lame 132 afin de faciliter la découpe de l'adhésif 105.

En service, la barrette aspirante 135 est agencée à proximité immédiate des deux platines 131 et 133.

Les moyens d'entraînement entraînent en rotation la poulie d'entraînement 116 pour provoquer la traction de la bande support 104.

Au niveau de l'organe de séparation 109, l'adhésif 5 se détache de la bande support 104 et est poussé en direction des deux platines 131 et 133 puis guidé par les deux platines 131 et 133 en direction de la barrette aspirante 135. De par sa rigidité due à son embossage, il est relativement simple et aisé de pousser et de guider l'adhésif 105 jusqu'à la barrette aspirante 135.

Une fois la longueur d'adhésif voulue atteinte, on commande la mise sous vide de la barrette aspirante afin de plaquer l'adhésif 105 contre la barrette aspirante puis on commande la découpe de l'adhésif 105 par la lame 132. On note que cette découpe est relativement aisée de par la bonne tension de l'adhésif 105, notamment plaqué contre la barrette aspirante 135, par le guidage entre les deux platines 131 et 133 et par la présence de la contre-partie assurée par la barrette aspirante 135 et la deuxième platine 133 (définissant ici entre elles une rainure dans laquelle peut s'insérer la lame 132).

Puis une fois l'adhésif 105 découpée, la barrette aspirante 135 peut se déplacer pour amener l'adhésif au niveau des deux gaines à encoller.

La découpe de l'adhésif 105 est ainsi simple et rapide.

L'invention n'est pas limitée à ce qui vient d'être décrit mais englobe au contraire toute variante entrant dans le cadre défini par les revendications.

En particulier, le rouleau d'embossage pourra être conformé différemment que ce qui a été indiqué. Par exemple le rouleau d'embossage pourra comporter un seul disque. Plusieurs rouleaux d'embossage pourront s'étendre de manière concentrique parallèlement à la première direction Z, chaque rouleau d'embossage étant par exemple conformé en forme de disque. D'autres types d'embossage que les nervures pourront être utilisés pour rigidifier la bande adhésive et notamment l'adhésif.

En outre, le nombre de galets tendeurs, de galets de guidage, de rouleaux d'embossage et de rouleaux d'empreinte pourra être différent de ce qui a été indiqué.

Le distributeur pourra comporter un nombre différent d'éléments que ce qui a été indiqué. Le distributeur pourra ainsi comporter directement les moyens d'entraînement en rotation de la poulie d'entraînement de la bande support. Le distributeur pourra directement comporter la barrette aspirante. De la même manière, le distributeur pourra ne pas comporter la poulie d'entraînement et/ou le galet d'entraînement correspondant qui seront portés par le reste du dispositif de raccordement.

## Revendications

1. Distributeur d'adhésif comprenant :
- une plateforme (7 ; 107),
- un dévidoir (2 ; 102) monté pivotant sur la plateforme et destiné à porter un rouleau d'adhésif, le rouleau d'adhésif comportant une bande support sur laquelle est agencé de l'adhésif, la bande et l'adhésif formant ensemble un ruban d'adhésif,
- un organe de séparation (9 ; 109) de l'adhésif de la bande support, l'organe de séparation étant agencé sur la plateforme,
**caractérisé en ce que** le distributeur d'adhésif comporte au moins un rouleau d'embossage (18 ; 118) agencé sur la plateforme entre le dévidoir et l'organe de séparation de sorte à, en service, embosser le ruban d'adhésif (3 ; 103) se dévidant du rouleau d'adhésif avant qu'il n'atteigne l'organe de séparation pour rigidifier le ruban d'adhésif.

2. Distributeur d'adhésif selon la revendication 1, dans lequel l'organe de séparation (9 ; 109) est conformé de sorte à présenter une base (10) et une pointe (11) s'étendant à partir de la base.

3. Distributeur d'adhésif selon la revendication 2, dans lequel la pointe (11) est conformée pour former une lame de sabre (12 ; 112) à son extrémité libre.

4. Distributeur d'adhésif selon la revendication 3, dans lequel la lame de sabre (12 ; 112) est dépourvue de dent.

5. Distributeur d'adhésif selon l'une des revendications précédentes, dans lequel l'organe de séparation (9 ; 109) est conformé de sorte qu'une première face principale (13) de l'organe de séparation en contact avec le ruban d'adhésif (3 ; 103) est plane.

6. Distributeur d'adhésif selon l'une des revendications précédentes, dans lequel l'organe de séparation (9 ; 109) est conformé de sorte qu'une deuxième face principale (14) de l'organe de séparation (9 ; 109) en contact avec la bande support (4) présente un décrochement formant une pente plus importante en sortie de l'organe de séparation.

7. Distributeur d'adhésif selon l'une des revendications précédentes, dans lequel le rouleau d'embossage (18 ; 118) est conformé pour nervurer le ruban d'adhésif.

8. Distributeur d'adhésif selon la revendication 7, dans lequel le rouleau d'embossage (18 ; 118) comporte entre un et quatre disques circonférentielles.

9. Distributeur d'adhésif selon l'une des revendications précédentes, comportant un organe de coupe (130) d'un adhésif du rouleau d'adhésif.

10. Distributeur d'adhésif selon l'une des revendications précédentes, comportant une barrette aspirante (135) pour porter un adhésif du rouleau d'adhésif.

11. Dispositif de raccordement de deux gaines tubulaires aplaties comprenant un distributeur d'adhésif selon l'une des revendications précédentes pour raccorder les deux gaines ensemble.

## Patentansprüche

1. Klebstoffspender, umfassend:
- eine Plattform (7; 107),
- eine Haspel (2; 102), die drehbar auf der Plattform gelagert und dazu bestimmt ist, eine Klebstoffrolle zu tragen, wobei die Klebstoffrolle ein Trägerband umfasst, auf dem der Klebstoff angeordnet ist, wobei das Band und der Klebstoff zusammen ein Klebeband bilden,
- ein Trennorgan (9; 109) zum Trennen des Klebstoffs von dem Trägerband, wobei das Trennorgan auf der Plattform angeordnet ist;
**dadurch gekennzeichnet, dass** der Klebstoffspender mindestens eine Prägerolle (18; 118) umfasst, die auf der Plattform zwischen der Haspel und dem Trennorgan derart angeordnet ist, dass im Betrieb das sich von der Klebstoffrolle abwickelnde Klebstoffband (3; 103) geprägt wird, ehe es das Trennorgan erreicht, um so das Klebstoffband zu versteifen.

2. Klebstoffspender nach Anspruch 1, bei dem das Trennorgan (9; 109) so geformt ist, dass es eine Basis (10) und eine Spitze (11) aufweist, die sich ab der Basis erstreckt.

3. Klebstoffspender nach Anspruch 2, bei dem die Spitze (11) so geformt ist, dass sie an ihrem freien Ende eine Säbelklinge (12; 112) bildet.

4. Klebstoffspender nach Anspruch 3, bei dem die Säbelklinge (12; 112) zahnlos ist.

5. Klebstoffspender nach einem der vorhergehenden Ansprüche, bei dem das Trennorgan (9; 109) so geformt ist, dass eine erste Hauptfläche (13) des Trennorgans in Kontakt mit dem Klebstoffband (3; 103) eben ist.

6. Klebstoffspender nach einem der vorhergehenden Ansprüche, bei dem das Trennorgan (9; 109) so geformt ist, dass eine zweite Hauptfläche (14) des Trennorgans (9; 109) in Kontakt mit dem Trägerband (4) einen Absatz aufweist, der eine größere Steigung am Ausgang des Trennorgans bildet.

7. Klebstoffspender nach einem der vorhergehenden Ansprüche, bei dem die Prägerolle (18; 118) so geformt ist, dass das Klebstoffband gerippt wird.

8. Klebstoffspender nach Anspruch 7, bei dem die Prägerolle (18; 118) zwischen ein und vier Umfangsscheiben umfasst.

9. Klebstoffspender nach einem der vorhergehenden Ansprüche, umfassend ein Schneidelement (130) zum Schneiden von Klebstoff der Klebstoffrolle.

10. Klebstoffspender nach einem der vorhergehenden Ansprüche, umfassend eine Saugleiste (135), um einen Klebstoff der Klebstoffrolle zu tragen.

11. Verbindungsvorrichtung zum Verbinden von zwei flachen rohrförmigen Schläuchen, umfassend einen Klebstoffspender nach einem der vorhergehenden Ansprüche, um die beiden Schläuche miteinander zu verbinden.

## Claims

1. An adhesive dispenser comprising:
- a platform (7; 107);
- an unwinder reel (2; 102) pivotally mounted on the platform and designed to carry a roll of adhesive, the roll of adhesive including a support strip on which the adhesive is arranged, the strip and the adhesive together forming an adhesive tape;
- a separator member (9; 109) for separating the adhesive from the support strip, the separator member being arranged on the platform;
being **characterized in that** the adhesive dispenser includes at least one embossing roller (18; 118) arranged on the platform between the unwinder reel and the separator member so that, in operation, it embosses the adhesive tape (3; 103) being unwound from the roll of adhesive before it reaches the separator member in order to stiffen the adhesive tape.

2. An adhesive dispenser according to claim 1, wherein the separator member (9; 109) is shaped so as to present a base (10) and a sharp tip (11) extending from the base.

3. An adhesive dispenser according to claim 2, wherein the sharp tip (11) is shaped to form a chisel blade (12; 112) at its free end.

4. An adhesive dispenser according to claim 3, wherein the chisel blade (12; 112) does not have teeth.

5. An adhesive dispenser according to any preceding claim, wherein the separator member (9; 109) is shaped so that a first main face (13) of the separator member in contact with the adhesive tape (3; 103) is plane.

6. An adhesive dispenser according to any preceding claim, wherein the separator member (9; 109) is shaped so that a second main face (14) of the separator member (9; 109) in contact with the support strip (4) presents a change of slope forming a slope that is greater at the outlet of the separator member.

7. An adhesive dispenser according to any preceding claim, wherein the embossing roller (18; 118) is shaped to form ribs in the adhesive tape.

8. An adhesive dispenser according to claim 7, wherein the embossing roller (18; 118) has one to four circumferential disks.

9. An adhesive dispenser according to any preceding claim, including a cutter member (130) for cutting adhesive of the roll of adhesive.

10. An adhesive dispenser according to any preceding claim, including a suction bar (135) for carrying adhesive of the roll of adhesive.

11. A device for connecting together two flattened tubular sheaths, the device including an adhesive dispenser according to any preceding claim in order to connect the two sheaths together.
